# EUROPÄISCHE PATENTSCHRIFT

(11) **EP 2 979 062 B1**
(45) Veröffentlichungstag und Bekanntmachung des Hinweises auf die Patenterteilung: **02.05.2018**
(21) Anmeldenummer: 14712679.1
(22) Anmeldetag: 27.03.2014
(51) Int. Cl.: G01C 15/00, G01C 15/02

(54) **VERFAHREN UND VORRICHTUNG ZUR ANZEIGE VON OBJEKTEN UND OBJEKTDATEN EINES KONSTRUKTIONSPLANS**
METHOD AND APPARATUS FOR DISPLAYING OBJECTS AND OBJECT DATA OF A CONSTRUCTION PLAN
PROCÉDÉ ET DISPOSITIF POUR L'AFFICHAGE D'OBJETS ET DE DONNÉES D'OBJETS D'UN PLAN DE CONSTRUCTION

(30) Priorität: 28.03.2013 DE 102013205593
(43) Veröffentlichungstag der Anmeldung: 03.02.2016
(73) Patentinhaber: Hilti Aktiengesellschaft, 9494 Schaan (LI)
(72) Erfinder: WINTER, Andreas, A-6800 Feldkirch (AT); HABENBACHER, Herwig, A-6806 Feldkirch-Tosters (AT); GOGOLLA, Torsten, CH-9494 Schaan (LI); WUERSCH, Christoph, CH-9470 Werdenberg (CH)
(74) Vertreter: Hilti Aktiengesellschaft Corporate Intellectual Property
(86) Internationale Anmeldenummer: PCT/EP2014/056108
(87) Internationale Veröffentlichungsnummer: WO 2014/154778

(56) Entgegenhaltungen:
- EP-A1- 2 453 205
- DE-A1- 19 545 589

## Beschreibung

### Technisches Gebiet

Die vorliegende Erfindung betrifft ein Verfahren zur Anzeige von Objekten und Objektdaten eines Konstruktionsplans auf einer Grenzfläche eines Raumes gemäß dem Oberbegriff des Anspruchs 1 sowie eine Vorrichtung zur Anzeige von Objekten und Objektdaten eines Konstruktionsplans gemäß dem Oberbegriff des Anspruchs 6.

### Stand der Technik

Bei einem Bauvorhaben ist eine Vielzahl an Berufsgruppen mit der Bauplanung, der Bauausführung und der Bauabnahme beschäftigt. Bei der Planung des Bauvorhabens erstellt ein Architekt oder Bauingenieur, ggfs. unter Heranziehung weiterer Fachleute, einen Konstruktionsplan des Bauvorhabens. Die Darstellung der Objekte im Konstruktionsplan erfolgt in einem Maßstab, der der Größe und Komplexität des Bauvorhabens angepasst ist. Im Bauprozess folgt auf die Bauplanung die Bauausführung, die auf der Baustelle stattfindet. Die Bauausführung wird von Bauarbeitern und Handwerkern mit Hilfe von Werkzeugen und Baumaschinen durchgeführt und von der Bauleitung oder einem Polier geleitet und koordiniert. Die verschiedenen Handwerker sind in Gewerken organisiert, wobei ein Gewerk in der Regel die Arbeiten umfasst, die einem geschlossenen Bauleistungsbereich zuzuordnen sind. Zu den Gewerken im Bauwesen zählen unter anderem: Zimmerer- und Holzarbeiten, Installationsarbeiten, Trockenbauarbeiten, Fliesenlegearbeiten und Elektroarbeiten. Bei der Bauausführung müssen die Handwerker die im Konstruktionsplan abgebildeten Objekte mit hohem Zeitaufwand auf die Baustelle übertragen, wobei Übertragungsfehler auftreten können. Nachteilig ist außerdem, dass ein herkömmlicher Konstruktionsplan nicht die zeitliche Abfolge zeigt, in der die Objekte bei der Bauausführung erstellt werden müssen.

DE 195 45 589 A1 und EP 2 453 205 A1 offenbaren bekannte Verfahren zur Anzeige von Objekten eines Konstruktionsplans auf einer Grenzfläche eines Raumes sowie entsprechende Vorrichtungen zur Durchführung der Verfahren. In einem ersten Schritt wird die Lage und Orientierung einer Projektionseinrichtung bestimmt, in einem zweiten Schritt werden in Bezug auf die Grenzfläche Objekte aus einem Konstruktionsplan ausgewählt und an die Projektionseinrichtung übermittelt und in einem dritten Schritt werden die Objekte von der Projektionseinrichtung auf die Grenzfläche projiziert. Nachteilig ist, dass der Bediener die Objekte, die auf die Grenzfläche projiziert werden sollen, aus einem Konstruktionsplan auswählen muss.

### Darstellung der Erfindung

Die Aufgabe der vorliegenden Erfindung besteht darin, ein Verfahren und eine Vorrichtung zur Anzeige von Objekten und Objektdaten eines Konstruktionsplans auf einer Grenzfläche eines Raumes zu entwickeln, die den Bediener unterstützen und Fehler beim Übertragen von Objekten aus dem Konstruktionsplan auf die Baustelle reduzieren.

Diese Aufgabe wird bei dem eingangs genannten Verfahren erfindungsgemäß durch die Merkmale des unabhängigen Anspruchs 1 und bei der eingangs genannten Vorrichtung erfindungsgemäß durch die Merkmale des unabhängigen Anspruchs 6 gelöst. Vorteilhafte Weiterbildungen sind in den abhängigen Ansprüchen angegeben.

Erfindungsgemäß ist das Verfahren zur Anzeige von Objekten und Objektdaten eines Konstruktionsplans auf einer Grenzfläche eines Raumes dadurch gekennzeichnet, dass:
▪ in einem ersten Schritt ein Konstruktionsplan des Raumes ausgewählt und in eine Kontrolleinrichtung geladen wird,
▪ in einem zweiten Schritt ein aktuelles Anzeigefeld einer Projektionseinrichtung auf der Grenzfläche bestimmt wird,
▪ in einem dritten Schritt das aktuelle Anzeigefeld auf der Grenzfläche mit dem Konstruktionsplan verglichen wird und die im aktuellen Anzeigefeld liegenden Objekte und Objektdaten des Konstruktionsplans bestimmt werden,
▪ in einem vierten Schritt für die im aktuellen Anzeigefeld liegenden Objekte und Objektdaten geeignete Projektionsparameter bestimmt und an die Projektionseinrichtung übermittelt werden, und
▪ in einem fünften Schritt die im aktuellen Anzeigefeld liegenden Objekte und Objektdaten mittels der Projektionseinrichtung auf die Grenzfläche projiziert werden.

Die Anzeige der Objekte und Objektdaten des Konstruktionsplans auf der Grenzfläche des Raumes hat den Vorteil, dass die Objekte dort angezeigt werden, wo sie im Rahmen der Bauausführung erstellt werden sollen. Die Übertragung der Objekte aus dem Konstruktionsplan auf die Grenzflächen des Raumes entfällt, so dass Fehler beim Übertragen von Objekten auf den zu bearbeitenden Untergrund entfallen. Außerdem bietet das erfindungsgemäße Verfahren die Möglichkeit, den Objekten des Konstruktionsplans eine zeitliche Abfolge zuzuordnen.

In einer Weiterentwicklung wird das aktuelle Anzeigefeld der Projektionseinrichtung auf der Grenzfläche aus einer aktuellen Position und einer aktuellen Orientierung bestimmt. Um die Objekte an die, im Konstruktionsplan vorgesehenen, Positionen auf die Grenzfläche zu projizieren, müssen die Koordinatensysteme des Konstruktionsplans und der Projektionseinrichtung aufeinander abgestimmt werden. Die Projektionseinrichtung ist Teil einer Anzeigeeinrichtung, die mindestens ein Zielobjekt aufweist, das die Ortskoordinaten der Anzeigeeinrichtung im Raum festlegt. Das Zielobjekt ist dazu geeignet, die Ortskoordinaten der Anzeigeeinrichtung mit Hilfe einer Referenzeinrichtung zu bestimmen.

In einer ersten Variante wird die Orientierung der Projektionseinrichtung im Raum aus den Ortskoordinaten von mindestens zwei Zielobjekten bestimmt und in einer zweiten Variante wird die Orientierung der Projektionseinrichtung im Raum mittels einer Kameraeinrichtung bestimmt.

In einer bevorzugten Weiterentwicklung wird der zweite bis fünfte Schritt des erfindungsgemäßen Verfahrens mit einer Wiederholfrequenz wiederholt. Die Wiederholung des zweiten bis fünften Schrittes ist wichtig, wenn die Anzeigeeinrichtung bewegt wird und sich die Position und Orientierung der Anzeigeeinrichtung ändert. Die Projektionseinrichtung projiziert die Objekte auf die Grenzfläche, die im aktuellen Anzeigefeld der Projektionseinrichtung liegen. So ist sichergestellt, dass die Objekte angezeigt werden, die der Bediener sehen möchte.

Insbesondere zur Ausführung des erfindungsgemäßen Verfahrens umfasst die Vorrichtung zur Anzeige von Objekten und Objektdaten eines Konstruktionsplans auf einer Grenzfläche eines Raumes:
▪ eine Bedieneinrichtung mit einem Bedienelement und einer Kontrolleinrichtung, und
▪ eine Anzeigeeinrichtung mit einer Projektionseinrichtung und einer Kontrolleinrichtung zum Steuern der Projektionseinrichtung.

Die erfindungsgemäße Vorrichtung ermöglicht, dass die Objekte eines Konstruktionsplans dort angezeigt werden, wo sie im Rahmen der Bauausführung erstellt werden sollen. Die Übertragung der Objekte aus dem Konstruktionsplan auf die Grenzflächen des Raumes entfällt, so dass Fehler beim Übertragen von Objekten auf den zu bearbeitenden Untergrund entfallen. Außerdem können Informationen über die Objekte und den Untergrund angezeigt werden.

Um die Objekte an die, im Konstruktionsplan vorgesehenen, Positionen auf die Grenzfläche zu projizieren, müssen die Koordinatensysteme des Konstruktionsplans und der Projektionseinrichtung aufeinander abgestimmt werden. Die Abstimmung erfolgt in der Regel mit einer bekannten Vorrichtung zum Bestimmen von zwei- oder dreidimensionalen Ortskoordinaten, die als Referenzeinrichtung bezeichnet wird und als Totalstation ausgebildet sein kann. Dabei werden in der Regel zunächst der Konstruktionsplan und das Koordinatensystem der Referenzeinrichtung und anschließend die Koordinatensysteme der Referenzeinrichtung und der Projektionseinrichtung aufeinander abgestimmt.

Bevorzugt weist die Anzeigeeinrichtung mindestens ein Zielobjekt auf, das die Ortskoordinaten der Anzeigeeinrichtung im Raum festlegt. Das mindestens eine Zielobjekt ist dazu geeignet, die Ortskoordinaten der Anzeigeeinrichtung in Innenräumen mit Hilfe einer Referenzeinrichtung zu bestimmen.

Besonders bevorzugt weist die Anzeigeeinrichtung mehrere Zielobjekte auf, die mehrere Ortskoordinaten der Anzeigeeinrichtung im Raum festlegen. Die Zielobjekte an der Anzeigeeinrichtung können dazu genutzt werden, eine aktuelle Orientierung der Anzeigeeinrichtung im Raum durch Differenzbildung zu bestimmen oder um die Genauigkeit beim Bestimmen der aktuellen Position im Raum zu erhöhen.

Alternativ weist die Anzeigeeinrichtung eine Kameraeinrichtung auf, die die Orientierung der Anzeigeeinrichtung im Raum bestimmt. Die Kameraeinrichtung ist gemeinsam mit der Referenzeinrichtung geeignet, die aktuelle Orientierung der Anzeigeeinrichtung im Raum zu bestimmen.

In einer ersten bevorzugten Ausführungsform ist die Anzeigeeinrichtung in ein Handgerät mit einem Handgriff integriert. Die Ausführung als Handgerät eignet sich für Bediener, die einen schnellen Überblick über die in einem Raum zu erstellenden Objekte erhalten möchten. Der Bediener umfasst den Handgriff und richtet das Handgerät mit der Projektionseinrichtung auf die Grenzfläche des Raumes, an der er sich die Objekte des Konstruktionsplanes anzeigen lassen möchte.

In einer zweiten bevorzugten Ausführungsform ist die Anzeigeeinrichtung in ein Gerät mit einem Befestigungsadapter integriert. Diese Ausführung ermöglicht die Befestigung der Anzeigeeinrichtung an einem Tripod, einer Höhenplattform, etc. und eignet sich unter anderem für Handwerker während der Bauausführung. Um in einer Grenzfläche, bspw. einer Wand, ein Bohrloch mit einer Bohrmaschine zu erstellen, muss die Projektion des Bohrloches auf die Grenzfläche konstant und möglichst genau sein.

Dabei ist das Gerät besonders bevorzugt um eine Drehachse oder einen Schwenkpunkt verstellbar ausgebildet. Der Bediener richtet die Anzeigeeinrichtung so im Raum aus, dass die Anzeigeeinrichtung die für den Bediener relevanten Objekte auf die Grenzfläche projiziert. Die Ausrichtung der Anzeigeeinrichtung kann manuell durch den Bediener erfolgen oder mittels einer Fernbedienung gesteuert werden.

In einer dritten bevorzugten Ausführungsform ist die Anzeigeeinrichtung an einem Arbeitsschutzhelm befestigt oder in einen Arbeitsschutzhelm integriert. Die Befestigung oder Integration der Anzeigeeinrichtung in einen Arbeitsschutzhelm bietet den Vorteil, dass das aktuelle Anzeigefeld der Anzeigeeinrichtung immer dort liegt, wo der Bediener hinschaut. Dem Bediener werden die Objekte und Objektdaten des Konstruktionsplans angezeigt, die in seinem Sichtfeld liegen. Hat der Bediener zunächst auf die linke Seitenwand des Raumes geschaut, dreht sich um 180° und schaut auf die gegen überliegende rechte Seitenwand, werden dem Bediener die Objekte und Objektdaten angezeigt, die auf der gegen überliegenden rechten Seitenwand angeordnet sind.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: die Anwendung einer erfindungsgemäßen Vorrichtung zur Anzeige von Objekten und Objektdaten eines Konstruktionsplans in einem Innenraum mit einer Bedieneinrichtung, einer Anzeigeeinrichtung und einer Referenzeinrichtung;
- FIG. 2: das Zusammenwirken der Bedieneinrichtung, der Anzeigeeinrichtung und der Referenzeinrichtung der in FIG. 1 gezeigten erfindungsgemäßen Vorrichtung in Form eines Blockdiagramms;
- FIG. 3: ein erfindungsgemäßes Verfahren zur Anzeige von Objekten und Objektdaten eines Konstruktionsplans auf einem zu bearbeitenden Untergrund mit der erfindungsgemäßen Vorrichtung der FIG. 1;
- FIGN. 4A, B: das Anzeigefeld der Anzeigeeinrichtung mit einer ersten Ebene (FIG. 4A) und einer zweiten Ebene (FIG. 4B) des Konstruktionsplans am Beispiel der in FIG. 1 dargestellten Anwendung; und
- FIGN. 5A-C: drei verschiedene Ausführungsformen der Anzeigeeinrichtung, die als Handgerät ausgebildet ist (FIG. 5A), die in einen Arbeitsschutzhelm integriert ist (FIG. 5B), und die als Gerät mit Befestigungsadapter ausgebildet ist (FIG. 5C).

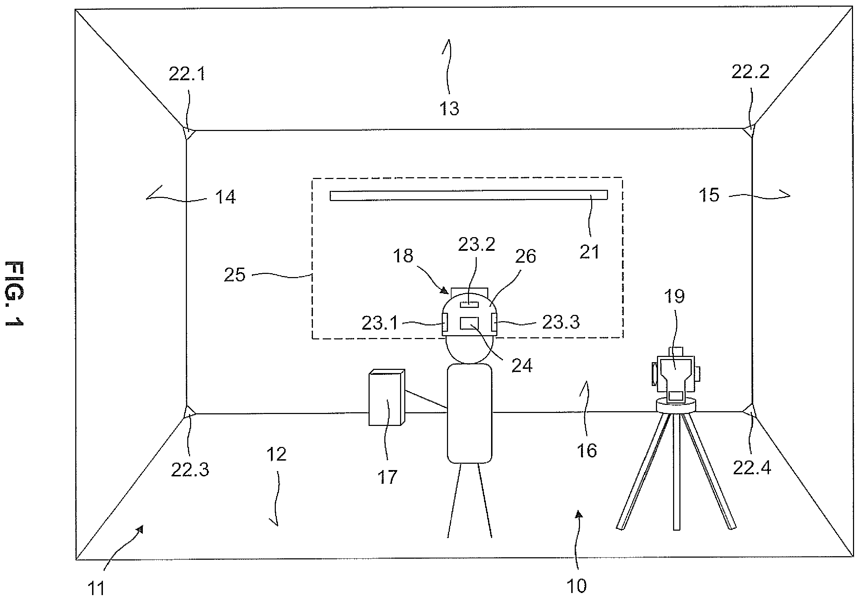

**FIG. 1** zeigt die Anwendung einer erfindungsgemäßen Vorrichtung **10** zur Anzeige von Objekten und Objektdaten eines Konstruktionsplans in einem Innenraum **11.** Der Innenraum 11 besteht aus einem Boden **12,** einer Decke **13,** zwei Seitenwänden **14, 15** und einer Rückwand **16.** Die Begrenzungen 12-16 des Innenraumes 11 werden unter dem Begriff "Grenzflächen" zusammengefasst.

FIG. 1 zeigt die wesentlichen Komponenten der Vorrichtung 10 in einer schematischen Darstellung. Die Vorrichtung 10 umfasst eine Bedieneinrichtung **17,** eine Anzeigeeinrichtung **18** und eine Referenzeinrichtung **19.** Alternativ zur in FIG. 1 gezeigten Trennung von Bedieneinrichtung 17 und Anzeigeeinrichtung 18 kann die Bedieneinrichtung in die Anzeigeeinrichtung integriert sein. Die Vorrichtung 10 zeigt Objekte und Objektdaten eines Konstruktionsplans auf einem Untergrund an. Als Konstruktionsplan wird eine technische Zeichnung eines Bauvorhabens bezeichnet, in der alle Informationen, die zur Herstellung eines Bauteils oder einer Baugruppe erforderlich sind, zeichnerisch dargestellt sind. Unter dem Begriff "Objekt" werden Bauteile, Baugruppen, etc., die im Konstruktionsplan enthalten sind, zusammengefasst. Zu den Objektdaten eines Objektes zählen beispielsweise die geometrischen Abmessungen des Objektes (Länge, Breite oder Durchmesser).

Die Funktionsweise der Vorrichtung 10 wird anhand einer typischen Bearbeitungsaufgabe erläutert: An der Rückwand 16 soll eine Montageschiene **21** befestigt werden. Die Befestigung der Montageschiene 21 erfolgt über zwei Befestigungsplatten. Dazu müssen nach einem vorgegebenen Muster Bohrlöcher in der Rückwand 16 erstellt werden, in die anschließend geeignete Dübel eingeführt werden. Die Art des Dübels und die Abmessungen des Dübels (Durchmesser) hängen zum einen vom Untergrund der Rückwand 16 und zum anderen von der Traglast der Montageschiene 21 ab. Der Untergrund der Rückwand 16 beeinflusst außerdem die Wahl eines geeigneten Bohrwerkzeuges und die Bohrparameter für eine Bohrmaschine.

Die Vorrichtung 10 soll die verschiedenen Handwerker bei ihren Aufgaben unterstützen. Zu den unterstützenden Aufgaben der Vorrichtung 10 gehört die Anzeige der Bohrlöcher auf der Rückwand 16. Um die Bohrlöcher an die, im Konstruktionsplan vorgesehenen, Positionen auf die Rückwand 16 zu projizieren, werden die Koordinatensysteme des Konstruktionsplans und der Anzeigeeinrichtung 18 mit Hilfe der Referenzeinrichtung 19 aufeinander abgestimmt. Dabei werden zunächst der Konstruktionsplan und das Koordinatensystem der Referenzeinrichtung 19 und anschließend die Koordinatensysteme der Referenzeinrichtung 19 und der Anzeigeeinrichtung 18 aufeinander abgestimmt.

Die Abstimmung der Referenzeinrichtung 19 auf den Konstruktionsplan erfolgt mit Hilfe bekannter Referenzobjekte. Im Konstruktionsplan sind mehrere Referenzobjekte definiert, die sich an markanten Positionen im Innenraum 11 befinden und daher geeignet sind, den Konstruktionsplan und das Koordinatensystem der Referenzeinrichtung 19 aufeinander abzustimmen. FIG. 1 zeigt vier Referenzobjekte **22.1, 22.2, 22.3, 22.4** in den vier Ecken des Innenraumes 11, die an die Rückwand 16 grenzen. Als Referenzobjekte werden beispielsweise reflektierende Zielobjekte eingesetzt.

Die Position und die Orientierung der Anzeigeeinrichtung 18 relativ zur Referenzeinrichtung 19 werden mit Hilfe von Zielobjekten bestimmt. Die Anzeigeeinrichtung 18 weist mehrere Zielobjekte auf, FIG. 1 zeigt drei Zielobjekte **23.1, 23.2, 23.3.** Die Orientierung der Anzeigeeinrichtung 18 relativ zur Referenzeinrichtung 19 kann alternativ mit Hilfe einer Kameraeinrichtung **24** bestimmt werden, die an der Anzeigeeinrichtung 18 befestigt wird. Abhängig von ihrer Position und Orientierung projiziert die Anzeigeeinrichtung 18 ein Anzeigefeld **25** auf die, der Anzeigeeinrichtung 18 gegenüber liegende, Grenzfläche. In FIG. 1 ist das Anzeigefeld 25 der Anzeigeeinrichtung 18 auf die Rückwand 16 projiziert. FIG.1 zeigt eine Anzeigeeinrichtung 18, die an einem Arbeitsschutzhelm **26** angebracht ist.

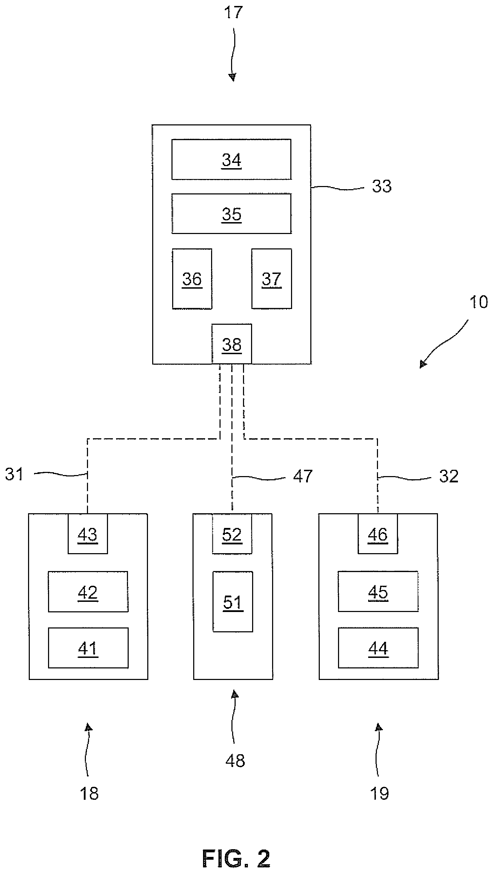

**FIG. 2** zeigt das Zusammenwirken der Bedieneinrichtung 17, der Anzeigeeinrichtung 18 und der Referenzeinrichtung 19 der in FIG. 1 gezeigten erfindungsgemäßen Vorrichtung 10 in Form eines Blockdiagramms.

Die Bedieneinrichtung 17 und die Anzeigeeinrichtung 18 sind als separate Teile ausgebildet und über eine Kommunikationsverbindung **31** miteinander verbunden bzw. verbindbar. Die Bedieneinrichtung 17 und die Referenzeinrichtung 19 sind ebenfalls über eine Kommunikationsverbindung **32** miteinander verbunden bzw. verbindbar. Die Kommunikationsverbindungen 31, 32 können als kabellose Kommunikationsverbindungen, beispielsweise als Infrarot-, Bluetooth-, WLAN- oder Wi-Fi-Verbindungen, oder als kabelgebundene Kommunikationsverbindungen ausgebildet sein. Neben den aufgeführten kabellosen Verbindungstechnologien eignen sich sämtliche bereits bekannten und zukünftigen kabellosen Verbindungstechnologien zur Daten- und Bildübertragung.

Die mobile Bedieneinrichtung 17 umfasst ein Gehäuse **33,** in das ein Bedienelement **34** und ein Anzeigeelement **35** integriert sind. Das Bedienelement 34 und das Anzeigeelement 35 können wie in FIG. 2 gezeigt als separate Teile ausgebildet oder gemeinsam beispielsweise in einen Touchscreen integriert sein. Die Bedieneinrichtung 17 weist außerdem eine Kontrolleinrichtung **36,** ein Speicherelement **37** und ein erstes Sende- und Empfangselement **38** auf.

Die Anzeigeeinrichtung 18 umfasst eine Projektionseinrichtung **41,** eine Kontrolleinrichtung **42** zur Steuerung der Projektionseinrichtung 41 und ein zweites Sende- und Empfangselement **43.** Ausgehend vom ersten Sende- und Empfangselement 38 der Bedieneinrichtung 17 wird die Kommunikationsverbindung 31 zum zweiten Sende- und Empfangselement 43 der Anzeigeeinrichtung 18 aufgebaut. Die Steuerbefehle zur Ablenkung der Projektionseinrichtung 41 werden von der Kontrolleinrichtung 36 der Bedieneinrichtung 17 über die Kommunikationsverbindung 31 an die Kontrolleinrichtung 42 der Anzeigeeinrichtung 18 übermittelt.

Die Referenzeinrichtung 19 umfasst eine Lasermesseinrichtung **44,** eine Kontrolleinrichtung **45** zur Steuerung der Lasermesseinrichtung 44 und ein drittes Sende- und Empfangselement **46.** Die Referenzeinrichtung 19 ist beispielsweise als Totalstation und die Lasermesseinrichtung 44 als Abstands- und Winkelmesseinrichtung ausgebildet. Ausgehend vom ersten Sende- und Empfangselement 38 der Bedieneinrichtung 17 wird die Kommunikationsverbindung 32 zum dritten Sende- und Empfangselement 46 der Referenzeinrichtung 19 aufgebaut. Über das Bedienelement 34 startet der Bediener die Bestimmung der Referenzposition und der Referenzorientierung. Der Steuerbefehl zur Referenzbestimmung wird von der Kontrolleinrichtung 36 der Bedieneinrichtung 17 über die Kommunikationsverbindung 32 an die Kontrolleinrichtung 45 der Referenzeinrichtung 19 übermittelt.

Der Konstruktionsplan ist im Speicherelement 37 der Bedieneinrichtung 17 gespeichert. Die Bedieneinrichtung 17 kann über eine weitere Kommunikationsverbindung **47** mit einem zentralen Speicher **48** verbunden werden. Unter dem Begriff "zentraler Speicher" werden sämtliche elektronischen Geräte zusammengefasst, die zur Archivierung von Daten dienen. Dazu gehören beispielsweise ein Server, ein Notebook, ein Computer, eine externe Festplatte und ein PDA. Über die Kommunikationsverbindung 47 können Konstruktionspläne aus dem zentralen Speicher 48 an die Bedieneinrichtung 17 übertragen und im Speicherelement 37 gespeichert werden oder bearbeitete Konstruktionspläne und zugehörige Dokumentationen werden von der Bedieneinrichtung 17 an den zentralen Speicher 48 übertragen und dort archiviert.

Der zentrale Speicher 48 umfasst eine Speichereinrichtung **51** und ein viertes Sende- und Empfangselement **52.** Ausgehend vom ersten Sende- und Empfangselement 38 der Bedieneinrichtung 17 wird die Kommunikationsverbindung 47 zum vierten Sende- und Empfangselement 52 des zentralen Speichers 48 aufgebaut. Daten in Form von Konstruktionsplänen, Foto- und Videodateien, etc. werden von der Kontrolleinrichtung 36 der Bedieneinrichtung 17 über die Kommunikationsverbindung 47 an die Speichereinrichtung 51 übermittelt oder die Kontrolleinrichtung 36 überträgt Daten aus der Speichereinrichtung 51 an die Bedieneinrichtung 17.

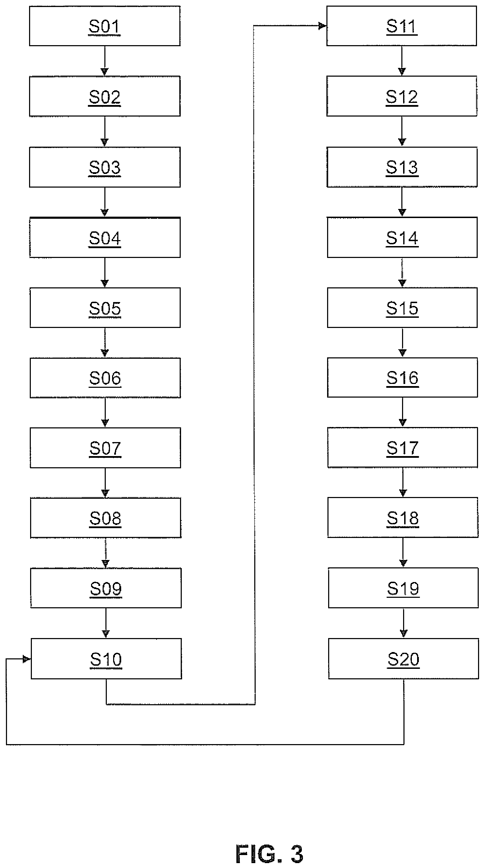

**FIG. 3** zeigt anhand eines Flussdiagramms ein erfindungsgemäßes Verfahren zur Anzeige von Objekten und Objektdaten eines Konstruktionsplans auf der Grenzfläche 16 des Innenraumes 11 mit der erfindungsgemäßen Vorrichtung 10 der FIG. 1.

Der Bediener wählt in einem Schritt **S01** an der Bedieneinrichtung 17 einen für seine Bearbeitungsaufgabe geeigneten Konstruktionsplan des Innenraumes 11 aus. Die Konstruktionspläne sind im Speicherelement 37 der Bedieneinrichtung 17 gespeichert und der geeignete Konstruktionsplan wird vom Bediener über das Bedienelement 34 ausgewählt. Der Konstruktionsplan wird in die Kontrolleinrichtung 36 geladen. Alternativ kann der Bediener über das Bedienelement 34 die Kommunikationsverbindung 47 zum zentralen Speicher 48 aufbauen und einen Konstruktionsplan aus der Speichereinrichtung 51 über die Kommunikationsverbindung 47 in die Kontrolleinrichtung 36 der Bedieneinrichtung 17 übertragen.

Der Konstruktionsplan kann als Gesamtplan alle Objekte des Innenraums 11 umfassen oder als Teilplan nur einige Objekte enthalten. Für verschiedene Handwerker, wie Elektriker, Maurer, Installateur, sind unterschiedliche Objekte und Objektdaten in einem Konstruktionsplan relevant. Um einen Konstruktionsplan an die Anforderungen des jeweiligen Handwerkers anpassen zu können, können die Teilpläne einzeln oder in verschiedenen Kombinationen von mindestens zwei Teilplänen ausgewählt und in Schritt S01 in die Kontrolleinrichtung 36 geladen werden.

Der Bediener wählt in einem Schritt **S02** an der Bedieneinrichtung 17 über das Bedienelement 34 aus den im Konstruktionsplan enthaltenen Referenzobjekten 22.1-22.4 ein erstes und zweites Referenzobjekt für die Referenzbestimmung (Referenzposition und Referenzorientierung) aus. Die Referenzbestimmung dient dazu, die Koordinatensysteme der Referenzeinrichtung 19 und des Konstruktionsplans abzugleichen. Zur Referenzbestimmung sind mindestens zwei Referenzobjekte erforderlich, deren Positionen im Konstruktionsplan angegeben sind. Durch Einsatz weiterer Referenzobjekte kann die Genauigkeit der Referenzbestimmung erhöht werden. Außerdem wählt der Bediener in einem Schritt **S03** aus den Zielobjekten 23.1-23.3 ein erstes und zweites Zielobjekt aus. Mit Hilfe der Zielobjekte werden die aktuelle Position und Orientierung der Anzeigeeinrichtung 18 relativ zur Referenzeinrichtung 19 bestimmt; dazu sind mindestens zwei Zielobjekte erforderlich. Alternativ kann die Orientierung der Anzeigeeinrichtung 18 relativ zur Referenzeinrichtung 19 mit Hilfe der Kameraeinrichtung 24 bestimmt werden. Für die Bestimmung der aktuellen Position der Anzeigeeinrichtung 18 ist nur ein Zielobjekt erforderlich, durch Einsatz weiterer Zielobjekte kann die Genauigkeit der Positionsbestimmung erhöht werden.

Die Lasermesseinrichtung 44 der Referenzeinrichtung 19 wird in einem Schritt **S04** vom Bediener manuell oder automatisch auf das erste Referenzobjekt ausgerichtet und die Lasermesseinrichtung 44 führt in einem Schritt **S05** eine Abstands- und Winkelmessung zum ersten Referenzobjekt aus. Die gemessenen Abstands- und Winkelwerte werden in einem Schritt **S06** über die Kommunikationsverbindung 32 an die Kontrolleinrichtung 36 der Bedieneinrichtung 17 übermittelt und in der Kontrolleinrichtung 36 gespeichert. Nach dem Vermessen des ersten Referenzobjekts wird das zweite Referenzobjekt analog zum ersten Referenzobjekt vermessen. Die Lasermesseinrichtung 44 wird in einem Schritt **S07** auf das zweite Referenzobjekt ausgerichtet und führt in einem Schritt **S08** eine Abstands- und Winkelmessung zum zweiten Referenzobjekt aus. Die gemessenen Abstands- und Winkelwerte werden in einem Schritt **S09** über die Kommunikationsverbindung 32 an die Kontrolleinrichtung 36 der Bedieneinrichtung 17 übermittelt und in der Kontrolleinrichtung 36 gespeichert.

Nach der Referenzbestimmung werden die aktuelle Position und Orientierung der Anzeigeeinrichtung 18 relativ zur Referenzeinrichtung 19 bestimmt. Die Lasermesseinrichtung 44 wird in einem Schritt **S10** vom Bediener manuell oder automatisch auf das erste Zielobjekt ausgerichtet und führt in einem Schritt **S11** eine Abstands- und Winkelmessung zum ersten Zielobjekt aus. Die gemessenen Abstands- und Winkelwerte werden in einem Schritt **S12** über die Kommunikationsverbindung 32 an die Kontrolleinrichtung 36 der Bedieneinrichtung 17 übermittelt und in der Kontrolleinrichtung 36 gespeichert. Nach dem Vermessen des ersten Zielobjekts wird das zweite Zielobjekt analog zum ersten Zielobjekt vermessen. Die Lasermesseinrichtung **44** wird in einem Schritt **S13** auf das zweite Zielobjekt ausgerichtet und führt in einem Schritt **S14** eine Abstands- und Winkelmessung zum zweiten Zielobjekt aus. Die gemessenen Abstands- und Winkelwerte werden in einem Schritt **S15** über die Kommunikationsverbindung 32 an die Kontrolleinrichtung 36 der Bedieneinrichtung 17 übermittelt und in der Kontrolleinrichtung 36 gespeichert. Aus den gemessenen Abstands- und Winkelwerten für die Zielobjekte berechnet die Kontrolleinrichtung 36 in einem Schritt **S16** die aktuelle Position und die aktuelle Orientierung der Anzeigeeinrichtung 17 relativ zur Referenzeinrichtung 19. Alternativ kann die aktuelle Orientierung der Anzeigeeinrichtung 18 relativ zur Referenzeinrichtung 19 mit Hilfe der Kameraeinrichtung 24 bestimmt werden.

In einem Schritt **S17** bestimmt die Kontrolleinrichtung 36 aus der aktuellen Position und der aktuellen Orientierung der Anzeigeeinrichtung 18 das aktuelle Anzeigefeld 25 der Anzeigeeinrichtung 18. Anschließend bestimmt die Kontrolleinrichtung 36 in einem Schritt **S18** geeignete Projektionsparameter für die Objekte des Konstruktionsplans, die im aktuellen Anzeigefeld 25 angeordnet sind, und übermittelt die Projektionsparameter in einem Schritt **S19** an die Projektionseinrichtung 41. Die Grenzflächen 12-16 des Innenraumes 11 können Unebenheiten aufweisen, die die Qualität und die Genauigkeit der projizierten Objekte beeinträchtigen. Die Oberfläche der Grenzflächen 12-16 kann mittels einer Kamera erfasst werden, die Unebenheiten der Grenzflächen 12-16 können mittels Bildbearbeitung ermittelt werden und in Schritt S18 in den Projektionsparametern berücksichtigt werden. Die Projektionseinrichtung 41 projiziert die im aktuellen Anzeigefeld 25 angeordneten Objekte und zugehörigen Objektdaten in einem Schritt **S20** auf die Rückwand 16. Nach Schritt S20 wird das Verfahren mit Schritt S10 fortgesetzt. Die Schritte S10 bis S20 werden mit einer Wiederholfrequenz wiederholt.

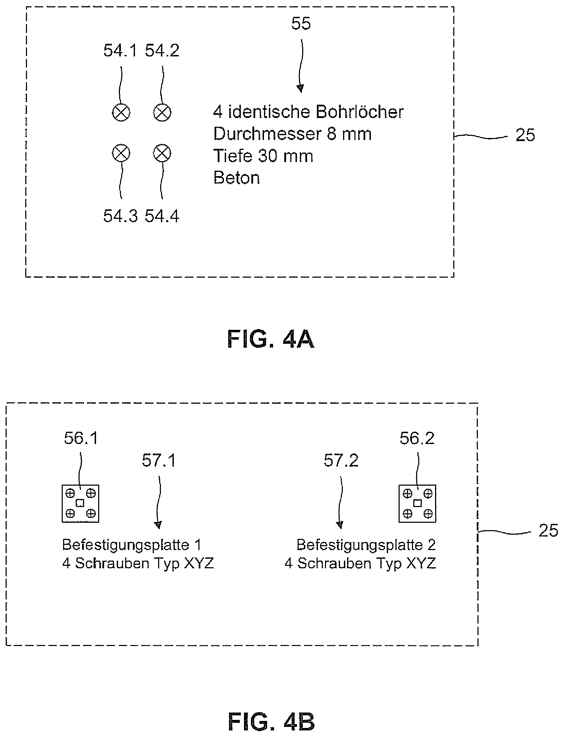

**FIGN. 4A****, B** zeigen das Anzeigefeld 25 der Anzeigeeinrichtung 18 mit einer ersten Ebene (FIG. 4A) und einer zweiten Ebene (FIG. 4B) des Konstruktionsplans am Beispiel der in FIG. 1 dargestellten Bearbeitungsaufgabe. An der Rückwand 16 soll die Montageschiene 21 mit Hilfe von zwei Befestigungsplatten befestigt werden.

FIG. 4A zeigt ein Bohrmuster mit vier identischen Bohrlöchern **54.1-54.4,** die in der Rückwand 16 erstellt werden. Neben den Positionen der Bohrlöcher 54.1-54.4 auf der Rückwand 16 sind relevante Objektdaten **55** zu den Bohrlöchern 54.1-54.4 auf die Rückwand 16 projiziert. Der Bediener kann über das Bedienelement 34 die Anzahl und Art der eingeblendeten Objektdaten 55 bestimmen. Bei einem Bohrloch gehören zu den relevanten Objektdaten beispielsweise der Durchmesser des Bohrlochs (Durchmesser 8 mm), die Tiefe des Bohrlochs (Tiefe 30 mm) und die Angabe des Untergrundes der Rückwand 16 (Beton).

FIG. 4B zeigt eine erste und zweite Befestigungsplatte **56.1, 56.2,** die auf den Untergrund projiziert sind. Die Montageschiene 10 wird mittels der Befestigungsplatten 56.1, 56.2 an der Rückwand 16 befestigt. Neben den Befestigungsplatten 56.1, 56.2 zeigt das Anzeigefeld 25 zugehörige Objektdaten **57.1, 57.2** zu den Befestigungsplatten 56.1, 56.2.

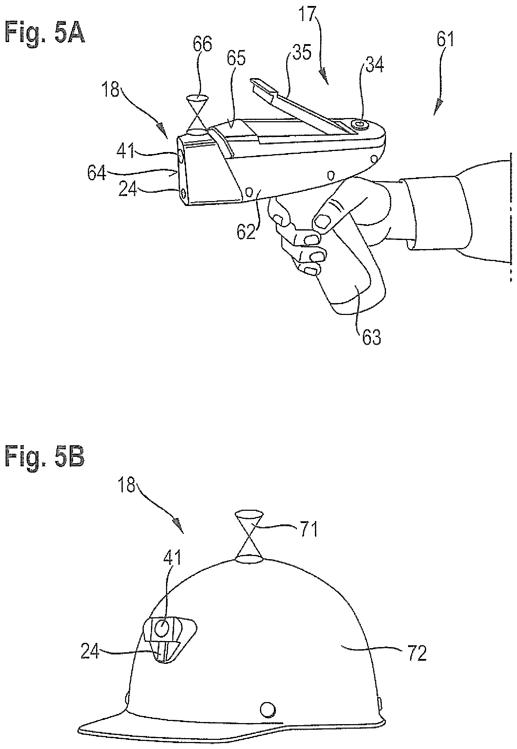

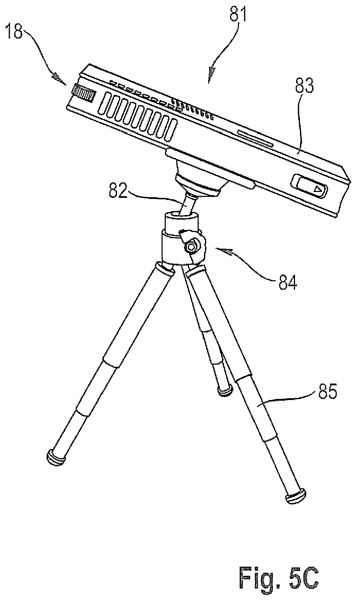

**FIGN. 5A-C** zeigen drei verschiedene Ausführungsformen der Anzeigeeinrichtung 18, die als Handgerät ausgebildet ist (FIG. 5A), die in einen Arbeitsschutzhelm integriert ist (FIG. 5B) und die als Gerät mit Befestigungsadapter ausgebildet ist (FIG. 5C).

FIG. 5A zeigt ein Handgerät **61,** in das die Anzeigeeinrichtung 18 und die Bedieneinrichtung 17 der Vorrichtung 10 integriert sind. Das Handgerät 61 umfasst ein Gerätegehäuse **62,** das mit einem Handgriff **63** verbunden ist. Der Bediener umfasst den Handgriff 63 und richtet das Handgerät 61 mit einer Vorderseite **64,** an der die Projektionseinrichtung 41 angeordnet ist, auf die Grenzfläche des Raumes, an der er sich die Objekte eines Konstruktionsplanes anzeigen lassen möchte. Das Bedienelement 34 und das Anzeigeelement 35 der Bedieneinrichtung 17 sind auf einer Oberseite **65** des Gerätegehäuses 62 angeordnet. Im Inneren des Gerätegehäuses 62 befinden sich die Kontrolleinrichtung 36 der Bedieneinrichtung 17 und die Kontrolleinrichtung 42 zur Steuerung der Projektionseinrichtung 41.

Die aktuelle Position des Handgerätes 61 bzw. der Anzeigeeinrichtung 18 wird mit Hilfe eines Zielobjektes **66** bestimmt, das auf der Oberseite 65 des Gerätegehäuses 62 befestigt ist. Die aktuelle Orientierung des Handgerätes 61 bzw. der Anzeigeeinrichtung 18 wird mit Hilfe der Kameraeinrichtung 24 bestimmt, die an der Vorderseite 64 des Gerätegehäuses 62 angeordnet ist.

FIG. 5B zeigt die Anzeigeeinrichtung 18 der Vorrichtung 10 mit der Projektionseinrichtung 41, der Kameraeinrichtung 24 und einem Zielobjekt **71,** die in einen Arbeitsschutzhelm **72** integriert oder am Arbeitsschutzhelm 72 befestigt sind. Die Integration der Projektionseinrichtung 41 in den Arbeitsschutzhelm 72 bietet den Vorteil, dass das aktuelle Anzeigefeld 25 der Anzeigeeinrichtung 18 immer dort liegt, wo der Bediener hinschaut. Dem Bediener werden genau die Objekte und Objektdaten des Konstruktionsplans angezeigt, die in seinem Sichtfeld liegen.

Ein Arbeitsschutzhelm ist ein Sicherheitshelm, der in vielen Industriestaaten als Zubehör zum Arbeitsschutz auf Baustellen oder anderen Gefahrenbereichen vorgeschrieben ist. An bekannten Arbeitsschutzhelmen können verschiedene Zubehörteile, wie beispielsweise ein Gehörschutz, eine batteriebetriebene Beleuchtung oder ein Gesichtsschutz für die Arbeit mit Motorsägen, befestigt werden.

FIG. 5C zeigt die Anzeigeeinrichtung 18 der Vorrichtung 10 in einer dritten Ausführungsform als Gerät **81** mit einem Befestigungsadapter **82.** Das Gerät 81 umfasst ein Gerätegehäuse **83,** das mit einer Verstelleinrichtung **84** verbunden ist. Das Gerät 81 ist mittels der Verstelleinrichtung 84 um eine Drehachse oder einen Schwenkpunkt verstellbar ausgebildet. Der Bediener richtet die Anzeigeeinrichtung 18 so im Raum aus, dass das Anzeigefeld der Anzeigeeinrichtung 18 die für den Bediener relevanten Objekte auf die Grenzfläche projiziert. Die Ausrichtung der Anzeigeeinrichtung 18 kann manuell durch den Bediener erfolgen oder mittels einer Fernbedienung gesteuert werden. Über den Befestigungsadapter 82 kann das Gerät 81 beispielsweise an einem Tripod **85** oder einer Höhenplattform befestigt werden.

## Patentansprüche

1. Verfahren zur Anzeige von Objekten (21; 54.1-54.4; 56.1, 56.2) und Objektdaten (55; 57.1, 57.2) eines Konstruktionsplans auf einer Grenzfläche (16) eines Raumes (11), wobei:
▪ in einem ersten Schritt ein Konstruktionsplan des Raumes (11) ausgewählt und in eine Kontrolleinrichtung (36) geladen wird,
▪ in einem zweiten Schritt ein aktuelles Anzeigefeld (25) einer Projektionseinrichtung (41) auf der Grenzfläche (16) bestimmt wird,
▪ in einem dritten Schritt das aktuelle Anzeigefeld (25) der Projektionseinrichtung (41) auf der Grenzfläche (16) mit dem Konstruktionsplan verglichen wird und die im aktuellen Anzeigefeld (25) liegenden Objekte (21; 54.1-54.4; 56.1, 56.2) und Objektdaten (55; 57.1, 57.2) des Konstruktionsplans bestimmt werden,
▪ in einem vierten Schritt für die im aktuellen Anzeigefeld (25) liegenden Objekte (21; 54.1-54.4; 56.1, 56.2) und Objektdaten (55; 57.1, 57.2) geeignete Projektionsparameter bestimmt und an die Projektionseinrichtung (41) übermittelt werden, und
▪ in einem fünften Schritt die im aktuellen Anzeigefeld (25) liegenden Objekte (21; 54.1-54.4; 56.1, 56.2) und Objektdaten (55; 57.1, 57.2) mittels der Projektionseinrichtung (41) auf die Grenzfläche (16) projiziert werden.

2. Verfahren nach Anspruch 1, **dadurch gekennzeichnet, dass** das aktuelle Anzeigefeld (25) der Projektionseinrichtung (41) auf der Grenzfläche (16) aus einer aktuellen Position und einer aktuellen Orientierung bestimmt wird.

3. Verfahren nach Anspruch 2, **dadurch gekennzeichnet, dass** die Orientierung der Projektionseinrichtung (41) im Raum (11) aus den Ortskoordinaten von mindestens zwei Zielobjekten (23.1, 23.2, 23.3) bestimmt wird.

4. Verfahren nach Anspruch 2, **dadurch gekennzeichnet, dass** die Orientierung der Projektionseinrichtung (41) im Raum (11) mittels einer Kameraeinrichtung (24) bestimmt wird.

5. Verfahren nach Anspruch 1, **dadurch gekennzeichnet, dass** der zweite bis fünfte Schritt mit einer Wiederholfrequenz wiederholt werden.

6. Vorrichtung (10) zur Anzeige von Objekten (21; 54.1-54.4; 56.1, 56.2) und Objektdaten (55; 57.1, 57.2) eines Konstruktionsplans auf einer Grenzfläche (16) eines Raumes (11) zur Durchführung eines Verfahrens nach einem der Ansprüche 1 bis 6, aufweisend:
▪ eine Bedieneinrichtung (17) mit einem Bedienelement (34) und einer Kontrolleinrichtung (36), und
▪ eine Anzeigeeinrichtung (18) mit einer Projektionseinrichtung (41) und einer Kontrolleinrichtung (42) zum Steuern der Projektionseinrichtung (41).

7. Vorrichtung nach Anspruch 6, **dadurch gekennzeichnet, dass** die Anzeigeeinrichtung (18) mindestens ein Zielobjekt (23.1, 23.2, 23.3; 66, 71) aufweist, das die Ortskoordinaten der Anzeigeeinrichtung (18) im Raum (11) festlegt.

8. Vorrichtung nach Anspruch 7, **dadurch gekennzeichnet, dass** die Anzeigeeinrichtung (18) mehrere Zielobjekte (23.1, 23.2, 23.3) aufweist, die mehrere Ortskoordinaten der Anzeigeeinrichtung (18) im Raum (11) festlegen.

9. Vorrichtung nach Anspruch 7, **dadurch gekennzeichnet, dass** die Anzeigeeinrichtung (18) eine Kameraeinrichtung (24) aufweist, die die Orientierung der Anzeigeeinrichtung (18) im Raum (11) bestimmt.

10. Vorrichtung nach einem der Ansprüche 6 bis 9, **dadurch gekennzeichnet, dass** die Anzeigeeinrichtung (18) in ein Handgerät (61) mit einem Handgriff (63) integriert ist.

11. Vorrichtung nach einem der Ansprüche 6 bis 9, **dadurch gekennzeichnet, dass** die Anzeigeeinrichtung (18) in ein Gerät (81) mit einem Befestigungsadapter (82) integriert ist.

12. Vorrichtung nach Anspruch 11, **dadurch gekennzeichnet, dass** das Gerät (81) um eine Drehachse oder einen Schwenkpunkt verstellbar ausgebildet ist.

13. Vorrichtung nach einem der Ansprüche 6 bis 9, **dadurch gekennzeichnet, dass** die Anzeigeeinrichtung (18) an einem Arbeitsschutzhelm (26) befestigt oder in einen Arbeitsschutzhelm (72) integriert ist.

## Claims

1. Method for displaying objects (21; 54.1-54.4; 56.1, 56.2) and object data (55; 57.1, 57.2) of a construction plan on a boundary surface (16) of a room (11), in which;
▪ in a first step a construction plan of the room (11) is selected and loaded into a control device (36),
▪ in a second step a current display field (25) of a projection device (41) on the boundary surface (16) is determined,
▪ in a third step the current display field (25) of the projection device (41) on the boundary surface (16) is compared with the construction plan and the objects (21; 54.1-54.4; 56.1, 56.2) and object data (55; 57.1,57.2) of the construction plan lying in the current display field (25) are determined,
▪ in a fourth step suitable projection parameters for the objects (21; 54.1-54.4; 56.1, 56.2) and object data (55; 57.1,57.2) lying in the current display field (25) are determined and transmitted to the projection device (41) and
▪ in a fifth step the objects (21; 54.1- 54.4; 56.1, 56.2) and object data (55; 57.1,57.2) lying in the current display field (25) are projected onto the boundary surface (16) by the projection device (41).

2. Method according to claim 1, **characterised in that** the current display field (25) of the projection device (41) on the boundary surface (16) is determined from a current position and a current orientation.

3. Method according to claim 2, **characterised in that** the orientation of the projection device (41) in the room (11) is determined from the position coordinates of at least two target objects (23.1, 23.2, 23.3).

4. Method according to claim 2, **characterised in that** the orientation of the projection device (41) in the room (11) is determined by a camera device (24).

5. Method according to claim 1, **characterised in that** the second to fifth step are repeated with a repetition frequency.

6. Device (10) for displaying objects (21; 54.1-54.4; 56.1, 56.2) and object data (55; 57.1, 57.2) of a construction plan on a boundary surface (16) of a room (11) for carrying out a method according to one of claims 1 to 6, comprising:
▪ an operating device (17) with an operating element (34) and a control device (36) and
▪ a display device (18) with a projection device (41) and a control device (42) for controlling the projection device (41).

7. Device according to claim 6, **characterised in that** the display device (18) has at least one target object (23.1,23.2, 23.3; 66, 71), which establishes the position coordinates of the display device (18) in the room (11).

8. Device according to claim 7, **characterised in that** the display device (18) has several target objects (23.1, 23.2, 23.3), which establish several position coordinates of the display device (18) in the room (11).

9. Device according to claim 7, **characterised in that** the display device (18) has a camera device (24), which determines the orientation of the display device (18) in the room (11).

10. Device according to one of claims 6 to 9, **characterised in that** the display device (18) is integrated into a hand-held device (61) with a hand grip (63).

11. Device according to one of claims 6 to 9, **characterised in that** the display device (18) is integrated into a device (81) with a fixing adapter (82).

12. Device according to claim 11, **characterised in that** the device (81) is adjustable about an axis of rotation or a pivot point.

13. Device according to one of claims 6 to 9, **characterised in that** the display device (18) is fixed to a protective work helmet (26) or integrated into a protective work helmet (72).

## Revendications

1. Procédé pour afficher des objets (21 ; 54.1-54.4 ; 56.1, 56.2) et des données d'objets (55 ; 57.1, 57.2) d'un plan de construction sur une surface limite (16) d'une pièce (11), dans lequel
▪ à une première étape, un plan de construction de la pièce (11) est choisi et chargé dans un dispositif de contrôle (36),
▪ à une deuxième étape, une zone d'affichage actuelle (25) d'un dispositif de projection (41) sur la surface limite (16) est déterminée,
▪ à une troisième étape, la zone d'affichage actuelle (25) du dispositif de projection (41) sur la surface limite (16) est comparée au plan de construction et les objets (21 ; 54.1-54.4 ; 56.1, 56.2) et les données d'objets (55 ; 57.1, 57.2) du plan de construction situés dans la zone d'affichage actuelle (25) sont déterminés,
▪ à une quatrième étape, des paramètres de projection adaptés aux objets (21 ; 54.1-54.4 ; 56.1, 56.2) et aux données d'objets (55 ; 57.1, 57.2) situés dans la zone d'affichage actuelle (25) sont déterminés et transmis au dispositif de projection (41), et
▪ à une cinquième étape, les objets (21 ; 54.1-54.4 ; 56.1, 56.2) et les données d'objets (55 ; 57.1, 57.2) situés dans la zone d'affichage actuelle (25) sont projetés sur la surface limite (16) au moyen du dispositif de projection (41).

2. Procédé selon la revendication 1, **caractérisé en ce que** la zone d'affichage actuelle (25) du dispositif de projection (41) sur la surface limite (16) est déterminée à partir d'une position actuelle et d'une orientation actuelle.

3. Procédé selon la revendication 2, **caractérisé en ce que** l'orientation du dispositif de projection (41) dans la pièce (11) est déterminée à partir des coordonnées géométriques d'au moins deux objets cibles (23.1, 23.2, 23.3).

4. Procédé selon la revendication 2, **caractérisé en ce que** l'orientation du dispositif de projection (41) dans la pièce (11) est déterminée au moyen d'un dispositif de caméra (24).

5. Procédé selon la revendication 1, **caractérisé en ce que** les deuxième à cinquième étapes sont répétées à une fréquence de répétition.

6. Dispositif (10) pour afficher des objets (21 ; 54.1-54.4 ; 56.1, 56.2) et des données d'objets (55 ; 57.1, 57.2) d'un plan de construction sur une surface limite (16) d'une pièce (11) pour mettre en oeuvre un procédé selon l'une des revendications 1 à 6, comportant :
▪ un dispositif de commande (17) avec un élément de commande (34) et un dispositif de contrôle (36), et
▪ un dispositif d'affichage (18) avec un dispositif de projection (41) et un dispositif de contrôle (42) pour commander le dispositif de projection (41).

7. Dispositif selon la revendication 6, **caractérisé en ce que** le dispositif d'affichage (18) comporte au moins un objet cible (23.1, 23.2, 23.3 ; 66, 71) qui détermine les coordonnées géométriques du dispositif d'affichage (18) dans la pièce (11).

8. Dispositif selon la revendication 7, **caractérisé en ce que** le dispositif d'affichage (18) comporte plusieurs objets cibles (23.1, 23.2, 23.3) qui déterminent plusieurs coordonnées géométriques du dispositif d'affichage (18) dans la pièce (11).

9. Dispositif selon la revendication 7, **caractérisé en ce que** le dispositif d'affichage (18) comporte un dispositif de caméra (24) qui détermine l'orientation du dispositif d'affichage (18) dans la pièce (11).

10. Dispositif selon l'une des revendications 6 à 9, **caractérisé en ce que** le dispositif d'affichage (18) est intégré dans un appareil portatif (61) muni d'une poignée (63).

11. Dispositif selon l'une des revendications 6 à 9, **caractérisé en ce que** le dispositif d'affichage (18) est intégré dans un appareil portatif (81) muni d'un adaptateur de fixation (82).

12. Dispositif selon la revendication 11, **caractérisé en ce que** l'appareil (81) est formé de manière à pouvoir être réglé autour d'un axe de rotation ou d'un point de pivotement.

13. Dispositif selon l'une des revendications 6 à 9, **caractérisé en ce que** le dispositif d'affichage (18) est fixé sur un casque de protection à usage professionnel (26) ou est intégré dans un casque de protection à usage professionnel (72).
